# EUROPEAN PATENT SPECIFICATION

(11) **EP 2 015 591 B1**
(45) Date of publication and mention of the grant of the patent: **10.10.2018**
(21) Application number: 06732471.5
(22) Date of filing: 28.04.2006
(51) Int. Cl.: H04W 36/38, H04W 36/30

(54) **COMMUNICATION TERMINAL APPARATUS AND HANDOVER METHOD**
KOMMUNIKATIONSENDGERÄTEVORRICHTUNG UND HANDOVER-VERFAHREN
APPAREIL TERMINAL DE COMMUNICATION ET PROCÉDÉ DE TRANSFERT

(43) Date of publication of application: 14.01.2009
(73) Proprietor: Panasonic Intellectual Property Corporation of America, Torrance, CA 90503 (US)
(72) Inventor: KANAZAWA, Takeshi, Osaka 540-6207 (JP)
(74) Representative: Grünecker Patent- und Rechtsanwälte PartG mbB
(86) International application number: PCT/JP2006/308968
(87) International publication number: WO 2007/125593

(56) References cited:
- EP-A1- 0 742 991
- EP-A2- 0 589 552
- JP-A- 2000 151 504
- JP-A- 2002 112 310
- JP-A- 2003 087 842
- MARTIN LEFKOWITZ-TRAPEZE NETWORKS ET AL: "Proposed draft text for the site reporting mechanism for TGk", INTERNET CITATION, 13 March 2003 (2003-03-13), XP002299876, Retrieved from the Internet: URL:http://www.grouper.ieee.org/groups/802 /11/Documents/D3T151-200.html [retrieved on 2004-10-08]
- ERICSSON: "On UTRA and E-UTRA mobility, Connected Mode", 3GPP DRAFT; R2-051952, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. London, UK; 20050826, 26 August 2005 (2005-08-26), XP050129098, [retrieved on 2005-08-26]

## Description

### Technical Field

The present invention relates to a communication terminal apparatus and handover method, and relates, for example, to a communication terminal apparatus and handover method for carrying out packet communications using mobile IP technology.

### Background Art

Network layer protocols supporting the Internet (hereinafter "IP") are used to manage and control data that flows from the source node to the target node in the form of IP data, by connecting with networks or subnetworks making up the Internet. In order to ensure reliable delivery of IP data packets, every node is assigned one IP address that defines the location of the node on a fixed network. Generally, IP is designed to support routing of IP packets between fixed network nodes.

However, accompanying the rapid development of radio nodes, there is a growing demand for providing IP support for mobile terminals in the same way as for fixed nodes. Here, fixed nodes generally do not move. Furthermore, mobile terminals can move within, for example, the area of the subnetworks or local area network ("LAN") segments. Furthermore, mobile terminals can also change the point of access to the subnetworks or LAN segments regularly through different network hosts. Furthermore, as is immediately understood by those skilled in the art, a compatible network host severs as a proxy for mobile terminals.

In order to ensure that data is correctly routed to a mobile terminal and maintains its continuity even if the point of access to the subnetworks or LAN and the IP address of the mobile terminal change regularly, the mobile terminal registers itself through connections with the subnetworks or LAN. This registration processing involves creating and saving registration records in the network hosts via connecting mobile terminals. That is, a network host is able to manage or support requests for move from mobile terminals using information including the registered records. For example, a network host may receive and process IP packet data from a mobile terminal and later send the processed IP data packet to another mobile terminal . When a mobile terminal keeps moving from one network host to another new network host, the mobile terminal carries out the process called "handover," whereby the mobile terminal terminates its registration with the old network host and registers itself with the new network host. The process of terminating registrations involves terminating registration record from the old network host. The process of terminating mobile terminal registrations is extremely important. For example, terminating mobile terminal registrations makes it no longer necessary to consume network resources and contributes to security. On the other hand, if terminating a mobile registration fails, one or more hosts react to the mobile terminal as a proxy, which makes the routing of IP data packets inadequate and leads to unacceptable network malfunctions.

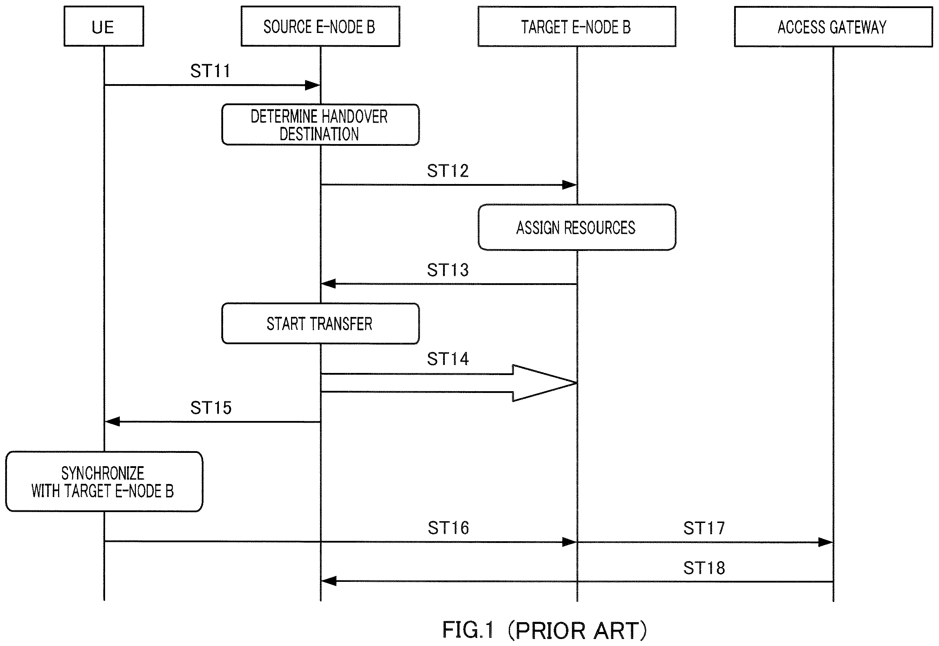

Non-Patent Document 1 is known to disclose a conventional method of handover between network hosts. The method of handover between network hosts disclosed in Non-Patent Document 1 will be explained using FIG.1. FIG.1 is a sequence diagram showing a conventional network-driven handover method. In FIG.1, a mobile terminal ("UE") carries out a handover from a source E-Node B to a target E-Node B.

First, to allow the source E-Node B to determine an appropriate target E-Node B for a handover, the mobile terminal reports, to the source E-Node B, the received quality of the target E-Node B of each candidate cell at the mobile terminal (i.e. measurement report) (step ST11).

Next, the source E-Node B, having received the received quality of each target E-Node B, determines the target E-Node B to be the handover destination, based on the received quality, resources and processing load of each target E-Node B (i.e. HO decision).

Next, the source E-Node B transfers the context of the mobile terminal including the radio bearer information and QoS information, to the target E-Node B determined to be the handover destination (i.e. context transfer) (step ST12), and inquires as to whether or not the mobile terminal is allowed to perform a handover.

Next, the target E-Node B allocates resources to the mobile terminal according to the QoS information included in the mobile terminal's context transferred by the source E-Node B (i.e. resource allocation), thereby booking resources.

Next, when the target E-Node B has successfully booked the resources which the target E-Node B requires in conjunction with the mobile terminal, the target E-Node B reports to the source E-Node B that the preparation for the handover is complete (i.e. context transfer response) (step ST13).

Next, the source E-Node B transfers, to the target E-Node B, user packets which the source E-Node B has sent to the mobile terminal and which nevertheless has not been returned an ACK indicating successful reception, from the mobile terminal, and user packets which the source E-Node B has received from the access gateway ("access GW") and which the source E-Node B nevertheless has not sent to the mobile terminal (i.e. start packet data forwarding) (step ST14).

Next, the source E-Node B commands the mobile terminal to perform a handover to the target E-Node B, and sends to the mobile terminal the cell-specific parameters that are necessary to communicate with the target E-Node B (i.e. RB reconfiguration) (step ST15).

Next, the mobile terminal having received the cell-specific parameters synchronizes with the target E-Node B (i.e. HO/Rx shared CH from target cell).

Next, the mobile terminal reports to the target E-Node B that the handover to the target E-Node B is complete (i.e. RB reconfiguration complete) (step ST16).

Next, the target E-Node B sends a path switch request to the access gateway (step ST17). The access gateway, having received the path switch request, establishes an IP tunnel by changing the destination address from the source E-Node B to the target E-Node B (hereinafter "path switching").

Next, the access gateway starts releasing the source E-Node B (i.e. release) (step ST18).

In this way, in FIG.1, the source E-Node B determines the target E-Node B based on received quality and so on at the mobile terminal, and makes preparations related to the handover of the mobile terminal between the source E-Node B and the target E-Node B. After the mobile terminal has established a complete connection to the target E-Node B, the mobile terminal switches the data path from the access gateway from the source E-Node B to the target E-Node B, and thereupon the handover is complete.

According to an IETF mobile IP, in step ST12 of FIG.1, after the "context transfer" has been sent from the source network host to the destination network host, the destination network host sends a mobile IP registration request to the access gateway (not shown in FIG.1). The context transfer then contains the home address of the mobile terminal, so that the destination network host is able to create a mobile IP table. After a mobile IP table has been created, the destination network host sends a mobile IP registration response to the source network host. Here, "mobile IP" refers to a technique of adding positional information to the original IP address, so that, wherever the mobile terminal moves to, the mobile terminal is able to carry out communications using the same IP address.

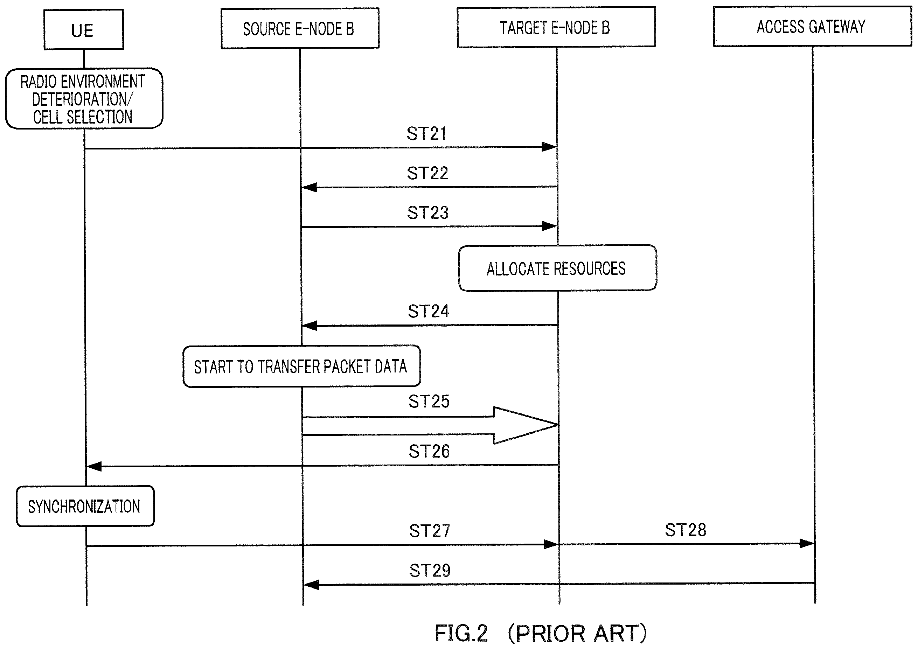

FIG.2 is a sequence diagram showing a conventional communication terminal apparatus-driven handover method. In FIG.2, a mobile terminal ("UE") carries out a handover from a source E-Node B to a target E-Node B.

When the radio environment for the mobile terminal and source E-Node B deteriorates, the mobile terminal selects a nearby cell, which is a cell near the cell to which the mobile terminal is currently connected, for the handover destination (i.e. radio failure/cell selection)).

Next, the mobile terminal sends a cell update, including the address of the previously connected source E-Node B, to the target E-Node B, which is the selected nearby cell (step ST21).

Next, the target E-Node B requests the context of the mobile terminal, including the radio bearer information, for example, from the source E-Node B (i.e. context transfer request) (step ST22).

Next, the source E-Node B transfers the UE Context, including the radio bearer information, for example, to the target E-Node B (i.e. context transfer response) (step ST23).

Next, the target E-Node B allocates resources to the mobile terminal according to the QoS information included in the UE context transferred by the source E-Node B (i.e. resource allocation), thereby booking resources.

Next, when the target E-Node B has successfully booked the resources which the target E-Node B requires in conjunction with the mobile terminal, the target E-Node B reports to the source E-Node B that the preparation for the handover is complete (i.e. context transfer confirm) (step ST24).

Next, the source E-Node B transfers, to the target E-Node B, user packets which the source E-Node B has sent to the mobile terminal and which nevertheless has not been returned an ACK indicating successful reception, from the mobile terminal, and user packets which the source E-Node B has received from the access gateway ("access GW") and which the source E-Node B nevertheless has not sent to the mobile terminal (i.e. start packet data forwarding) (step ST25).

Next, the target E-Node B reports to the mobile terminal that cell updating is complete (i.e. cell update confirm) (step ST26).

Next, the mobile terminal synchronizes with the target E-Node B (i.e. HO/Rx shared CH from target cell) .

Next, the mobile terminal reports to the target E-Node B that the handover to the target E-Node B is complete (i.e. RB reconfiguration complete) (step ST27).

Next, the target E-Node B sends a path switch request to the access gateway (step ST28). The access gateway, having received the path switch request, performs path switching by changing the destination address from the source E-Node B to the target E-Node B.

Next, the access gateway starts releasing the source E-Node B (i.e. release) (step ST29).

Thus, two conventional handover are known, one method being a network-driven handover method in which the network host determines the network host of the destination, and the other method being a terminal-driven handover method in whcih the mobile terminal determines the network host of the destination. Furthermore, a handover method is conventionally known, whereby a network-driven handover is performed if the connection with the source network host is living, whereby a terminal-driven handover is performed if the radio connection is cut before the network host commands a handover to the mobile terminal, and whereby, therefore, a handover can be performed in either the network-driven method or in the communication terminal apparatus-driven method.

The 3GPP R2-051952 document, "On UTRA and E-UTRA mobility, Connected Mode" by Ericsson discloses that terminal controlled or triggered cell changes can also be supported in parallel to network control handovers.

Non-Patent Document 1: TSGR3 (05) 1106, "EUTRAN handover procedure for LTE_ACTIVE," Joint RAN2-RAN3 #48bis LTE Cannes, France, llth-14th October 2005

Further, EP0742991 A1 discloses a dual mode subscriber terminal and a handover procedure of the dual mode subscriber terminal in a mobile tele-communications network.

European Patent Application Publication 0589552 A2 discloses method and apparatus for maintaining connectivity of nodes in wireless local area network.

### Disclosure of Invention

### Problems to be Solved by the Invention

However, in conventional systems, if the radio conditions of the source network host gradually deteriorates, the radio link between the mobile terminal and the network host is cut during the period the mobile terminal sends a measurement report to the source network host until the mobile terminal receives the RB reconfiguration from the source network host, that is, between step ST11 and step ST15. In this case, since the mobile terminal searches for a nearby cell after the radio link is cut, there is a problem that it takes considerably long time to resume communications via a new network host, compared to conventional cases where network-driven handover is performed. That is, when the radio conditions between the mobile terminal and the source E-Node B deteriorate suddenly, the radio link is cut before network-driven handover at the initiative of the source E-Node B is complete, which results in a problem that the time it takes to resume communications by terminal-driven handover at the initiative of the terminal, becomes longer.

It is therefore an object of the present invention to provide a communication terminal apparatus and handover method for performing a network-driven handover and a communication terminal apparatus-driven handover in parallel, so that, even when the link between the communication terminal apparatus and the handover source is cut before a handover is complete, a fast handover is still possible by a communication terminal apparatus-driven handover.

### Means for Solving the Problem

The means are presented by the subject matter of the independent claims. Advantageous embodiments are subject to the dependent claims.

### Advantageous Effect of the Invention

According to the present invention, a network-driven handover and a communication terminal apparatus-driven handover are performed in parallel, so that, even when the link between the communication terminal apparatus and the handover source is cut before a handover is complete, a fast handover is still possible by a communication terminal apparatus-driven handover.

### Brief Description of Drawings

FIG.1 is a sequence diagram showing a conventional network-driven handover method;
FIG.2 is a sequence diagram showing a conventional communication terminal apparatus-driven handover method;
FIG.3 is a block diagram showing a configuration of a communication terminal apparatus and network host according to an embodiment of the present invention;
FIG.4 shows a configuration of a network according to the embodiment of the present invention; and
FIG.5 shows a sequence diagram showing a handover method according to the embodiment of the present invention.

### Best Mode for Carrying Out the Invention

An embodiment of the present invention will be explained in detail below with reference to the accompanying drawings.

### (Embodiment)

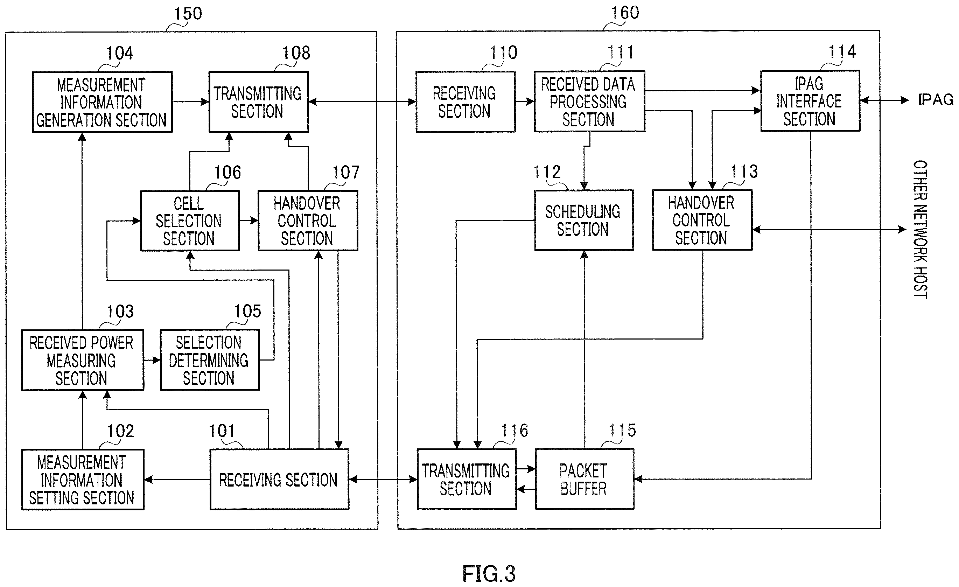

FIG.3 is a block diagram showing a configuration of communication terminal apparatus 150 and network host 160 according to an embodiment of the present invention.

First, the configuration of communication terminal apparatus 150 will be explained using FIG.3.

Receiving section 101 receives a signal transmitted from handover source network host 160 or handover destination network host 160, via a radio channel, following commands from handover control section 107, down-converts the received signal from radio frequency to baseband frequency, and outputs the received signal to measurement information setting section 102, received power measuring section 103, cell selection section 106 and handover control section 107. Furthermore, receiving section 101 receives a signal including handover destination information, which is information about the handover destination determined by the handover source, and outputs the signal to handover control section 107.

Measurement information setting section 102 commands received power measuring section 103 to measure received power using a measurement method specified by the control data included in the received signal inputted fromreceiving section 101. Here, the measurement method covers the time interval of measuring received power, for example.

Received powermeasuring section 103 measures the received power of a nearby cell of a handover destination candidate, using the measurement method specified by measurement information setting section 102 for each cell. Received power measuring section 103 then outputs the measurement values of measured received power to measurement information generation section 104 and selection determining section 105.

Measurement information generation section 104 generates received quality information for reporting the measurement values inputted from received power measuring section 103, to network host 160. Measurement information generation section 104 then outputs the generated received quality information, to transmitting section 108.

Selection determining section 105 compares the measurement values inputted from received power measuring section 103 against a predetermined threshold and determines whether or not a handover driven by communication terminal apparatus 150 is going to be performed, that is, whether or not communication terminal apparatus 150 takes the initiative to select the handover destination cell. To be more specific, selection determining section 105 determines to perform a communication terminal apparatus 150-driven handover when a measurement value is equal to or less than the threshold, or determines not to perform a communication terminal apparatus 150-driven handover and instead determines to perform a network-driven handover, when a measurement value is greater than the threshold. Upon determining to perform a communication terminal apparatus 150-driven handover, selection determining section 105 outputs the measurement value inputted from received power measuring section 103 to cell selection section 106 and also commands cell selection section 106 to select the handover destination cell based on the outputted measurement value.

When commanded by selection determining section 105 to select the handover destination cell, cell selection section 106 selects the handover destination cell based on the measurement value inputted from selection determining section 105. Cell selection section 106 then outputs cell information, which is information about the selected cell, to handover control section 107 and transmitting section 108. Furthermore, cell selection section 106 extracts information about the address of the currently connected network host, that is, the handover source network host, from the received signal inputted from receiving section 101, stores the information about the address, and outputs the stored information about the address of the handover source network host, to transmitting section 108, together with the cell information.

Handover control section 107 performs a handover based on the handover destination information inputted from receiving section 101 or based on the cell information inputted from cell selection section 106. To be more specific, upon receiving the handover destination information from receiving section 101, handover control section 107 determines to perform a handover to the network host of the handover destination cell of the inputted handover destination information, and controls receiving section 101 and transmitting section 108 accordingly. Upon receiving cell information from cell selection section 106, handover control section 107 determines to perform a handover to the network host of the cell of the inputted cell information, and controls receiving section 101 and transmitting section 108 accordingly. When, for example, handover destination information is inputted from receiving section 101 earlier than cell information is inputted from cell selection section 106, in a given period of time, handover control section 107 performs a handover to the handover destination cell of the handover destination information. On the other hand, if cell information is inputted from cell selection section 106 earlier than handover destination information is inputted from receiving section 101 in a given period of time, handover control section 107 performs a handover to the handover destination cell of the cell information. Handover control section 107 is by no means limited to these cases of determining the handover destination cell based on earlier input, and it is also possible to perform a handover to the network host of the cell of cell information, when no handover destination information is inputted more than the given period of time passes after received quality information is inputted. In this case, handover control section 107 needs to be reported the timing for transmitting received quality information from measurement information generation section 104.

Transmitting section 108 up-converts a transmission signal including the received quality information inputted from measurement information generation section 104 from baseband frequency to radio frequency, and transmits the transmission signal. Furthermore, transmitting section 108 up-converts the transmission signal including the cell information, inputted from cell selection section 106, from baseband frequency to radio frequency, and transmits the transmission signal. Furthermore, transmitting section 108 transmits a signal to the handover source network host or the handover destination network host, following commands from handover control section 107.

Next, the configuration of network host 160 will be explained using FIG.3.

Receiving section 110 receives a signal transmitted from communication terminal apparatus 150 using a radio channel, down-converts the received signal from radio frequency to baseband frequency and outputs the signal to received data processing section 111.

Received data processing section 111 demodulates the received signal inputted from receiving section 110 and disassembles the received signal into the data part and the control data part. Received data processing section 111 outputs the disassembled data part to IP access gateway (hereinafter described as "IPAG") interface section 114 and outputs the disassembled control data part to scheduling section 112 and handover control section 113.

Scheduling section 112 performs scheduling based on the received quality information, which is transmitted from communication terminal apparatus 150 and which is included in the control data part inputted from received data processing section 111, and based on queue information, which is information about the amount of data stored in packet buffer 115 inputted from packet buffer 115. For example, scheduling section 112 holds a table storing scheduling information which associates received quality such as CQI (channel quality indicator) with the amount of transmission data. Scheduling section 112 then selects the amount of transmission data with reference to the scheduling information using the received quality in received quality information such as the CQI inputted from received data processing section 111 and also with reference to the queue information. Furthermore, scheduling section 112 controls transmitting section 116 to transmit only the selected amount of transmission data.

Handover control section 113 performs different processing depending on whether network host 160 is the handover source or the handover destination.

That is, when network host 160 is the handover source, handover control section 113 selects the handover destination network host based on the received quality in the received quality information about a plurality of network hosts, included in the control data part inputted from received data processing section 111. For example, handover control section 113 selects the network host having the best received quality in the received quality information, as the handover destination. Handover control section 113 inquires the selected handover destination network host as to whether or not a handover is possible, and, when the handover destination network host is able to perform a handover, outputs to transmitting section 116 a command for a handover of communication terminal apparatus 150 to the handover destination network host . Furthermore, handover control section 113 transmits or receives various types of information, to allow a handover with the remote network host of the handover destination.

When network host 160 is the handover destination, handover control section 113 recognizes that its network host has been selected as the handover destination by receiving from the other network host, that is, from the handover source, a report that network host 160 has been selected as the handover destination, or through a message included in the control data part inputted from received data processing section 111 reporting that the its network host has been selected as the handover destination by communication terminal apparatus 150. Handover control section 113 decides whether or not a handover of communication terminal apparatus 150 to the its network host is possible based on the conditions of radio resources of the network host, and, when a handover is possible, outputs a message indicating that a handover is possible, to the other, handover-source network host, or to transmitting section 116. To request path switching to the IPAG, which is the processing of switching the path to the network host of the handover destination, handover control section 113 creates a switch request message, which is a message for requesting path switching. To be more specific, handover control section 113 creates an IP registration request message as the switch request message. In this case, handover control section 113 sets the IP address of the network host of the handover destination in the care-of address field in the IP registration request message and meanwhile sets the IP address of communication terminal apparatus 150 in the home address field in the IP registration request message . Handover control section 113 then outputs the created IP registration request message, to IPAG interface section 114. Furthermore, handover control section 113 transmits or receives various types of information, to allow a handover with the remote network host of the handover destination.

IPAG interface section 114 is connected to the IPAG via cable and sends the data part inputted from received data processing section 111 to the IPAG. Furthermore, IPAG interface section 114 outputs the data part received from the IPAG, to packet buffer 115. Furthermore, IPAG interface section 114 sends to the IPAG the switch request message inputted from handover control section 113 and meanwhile outputs to handover control section 113 a switch allowing message for reporting that the request for switching the path switch is granted.

Packet buffer 115 outputs the queue information to scheduling section 112. Furthermore, packet buffer 115 stores the packet data inputted from IPAG interface section 114 on a temporary basis. Packet buffer 115 then outputs packet data, in the amount of data specified by transmitting section 116, to transmitting section 116, at predetermined timing.

Transmitting section 116 commands packet buffer 115 to output data in the amount of data specified by scheduling section 112, and sends packet data of the specified amount, inputted from packet buffer 115, using radio signals. Furthermore, transmitting section 116 sends the message commanding the handover, inputted from handover control section 113, using a radio signal.

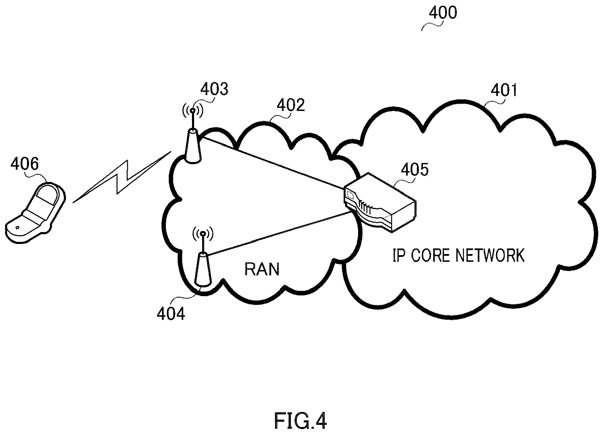

FIG.4 shows the architecture of network 400 according to the present embodiment. Network 400 is made up of IP-based core network 401 and radio access network ("RAN") 402. Network hosts 403 and 404 are located on RAN 402 and are connected to IPAG 405 via cable. IPAG 405 is located in IP core network 401 and serves as a gateway for external networks. Communication terminal apparatus 406 accesses network host 403 using radio access technology, and communicates with external networks via IPAG 405.

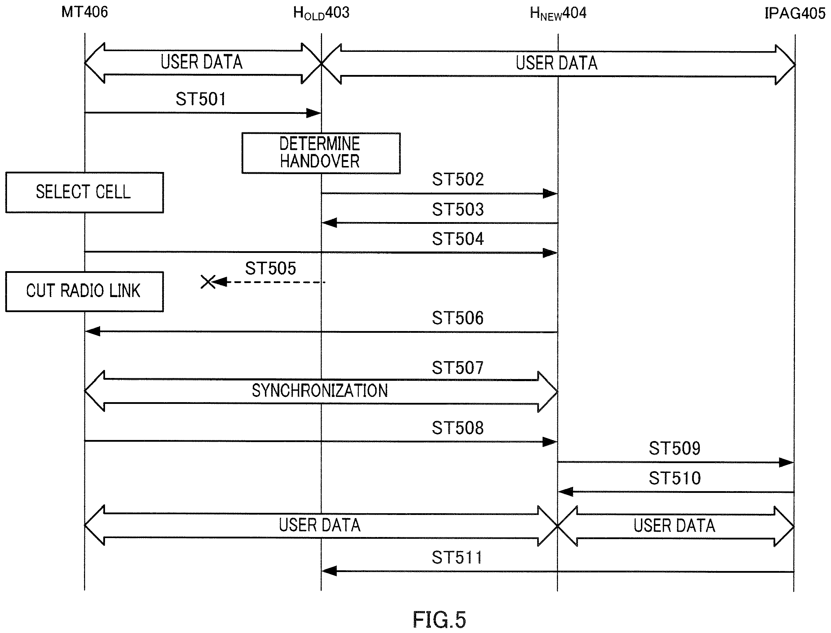

Next, the method communication terminal apparatus 406 to performs a handover will be explained using FIG.5. FIG.5 is a sequence diagram showing the handover method. In FIG.5 and explanation of FIG.5, communication terminal apparatus 406 is "MT," handover source network host 403 is "H_{OLD}" and handover destination network host 404 is "H_{NEW}," for ease of explanation. Furthermore, H_{OLD} 403 and H_{NEW} 404 have the same configuration as the configuration of network host 160 in FIG.3, and the MT has the same configuration as communication terminal apparatus 150 in FIG.3. FIG.5 shows a case where MT 406 performs a handover to H_{NEW} 404 while MT 406 is connected to H_{OLD} 403 and communicating with an external network and MT 406 is communicating with the external network via H_{OLD} 403 and IPAG 405.

First, measurement information generation section 104 of MT 406 generates received quality information about the handover destination candidate cell and transmitting section 108 of MT 406 reports the received quality by sending received quality information about the handover candidate cell to H_{OLD} 403, which is the connection destination, so that H_{OLD} 403 is able to determine appropriate H_{NEW} 404 for the handover (i.e. measurement report) (step ST501).

Next, H_{OLD} 403 determines H_{NEW} 404 which becomes the handover destination based on resources of each cell, processing load of each cell and the received quality information reported in step ST501 (i.e. handover decision).

Next, received power measuring section 103 of MT 406 measures the received power of each cell, and selection determining section 105 of MT 406 determines to select a cell at the initiative of MT 406, when the received power is equal to or less than a threshold. Cell selection section 106 of MT 406 selects the cell having the highest received power from among the candidate handover destination cells (i.e. cell selection).

Next, H_{OLD} 403 transfers to H_{NEW} 404 the context, including, for example, the radio bearer information (i.e. context transfer) (step ST502).

Next, when H_{NEW} 404 successfully books the resources which MT 406 requires, handover control section 113 of H_{NEW} 404 reports to H_{OLD} 403 that the preparation for the handover is complete (i.e. context transfer response) (step ST503).

Next, MT 406 sends out a cell update including the address of handover source H_{OLD} 403, to H_{NEW} 404 selected as the handover destination (step ST504).

Next, the radio link between MT 406 and H_{OLD} 403 is cut when the train in which the user of MT 406 is travelling enters a tunnel or the like (i.e. radio failure) .MT 406 cuts the radio link when, for example, MT 406 does not receive any signal from H_{OLD} 403 in a predetermined time.

Since the radio link between MT 406 and H_{OLD} 403 is cut, the cell-specific parameters that are necessary to communicate with H_{NEW} 404, do not reach MT 406 (i.e. RB reconfiguration) (step ST505).

Next, H_{NEW} 404 reports to MT 406 that cell updating is complete (i.e. cell update confirm) (step ST506).

Next, MT 406 synchronizes with H_{NEW} 404 (i.e. radio L1 & L2 establishment) (step ST507).

Next, MT 406 reports to H_{NEW} 404 that the handover to H_{NEW} 404 is complete (i.e. RB reconfiguration complete) (step ST508).

Next, H_{NEW} 404 sends a path switch request to IPAG 405 (step ST509).

Next, IPAG 405 carries out path switching by changing the destination address from H_{OLD} 403 to H_{NEW} 404.

Next, IPAG 405 sends path switch reply to H_{NEW} 404 (step ST510).

Next, IPAG 405 starts to release H_{OLD} 403 (i.e. resource release) (step ST511).

In this way, the present embodiment performs a network-driven handover, which is a handover performed by the initiative of the handover source, and a communication terminal apparatus-driven handover, which is a handover performed by the initiative of the communication terminal apparatus, are performed in parallel, so that, even when the link between the communication terminal apparatus and the handover source is cut before a handover is complete, a fast handover is still possible by a communication terminal apparatus-driven handover.

### Industrial Applicability

The communication terminal apparatus and handover method according to the present invention are suitable for use in, for example, packet communications using mobile IP technology.

## Claims

1. A communication terminal apparatus comprising:
a received quality measuring section (103) that is adapted to measure received quality on a per cell basis;
a received quality reporting section (104, 108) that is adapted to report received quality information, comprising information about measured received quality of a handover candidate cell, to a network host that is a handover source of the communication terminal apparatus;
a selection determining section (105) that is adapted to determine whether or not to initiate a handover driven by the communication terminal apparatus to a handover destination cell, the determination initiating the handover being driven by the communication terminal apparatus when the measured received quality is equal to or less than a threshold;
a cell selection section (106) that is adapted to select the handover destination cell based on the received quality measured in the received quality measuring section, when the selection determining section determines to initiate the handover driven by the communication terminal apparatus;
a receiving section (101) that is adapted to receive handover destination information, comprising information about a handover destination cell selected by the network host, the handover destination cell being selected in the network host of the communication terminal apparatus based on the received quality in the reported received quality information; and
handover control section (107) that is adapted to perform a handover to the handover destination cell selected by the cell selection section when the handover destination information is not inputted from the receiving section (101) to the handover control section (107) in a predetermined period of time following the reporting of the received quality information to the network host.

2. The communication terminal apparatus according to claim 1, wherein when the handover destination information is inputted from the receiving section (101) to the handover control section (107) in the predetermined period of time following the reporting of the received quality information to the network host, the handover control section is adapted to select the handover destination cell selected by the network host if the handover destination information is inputted from the receiving section earlier than cell information including the selection of the cell selection section is inputted from the cell selection section in a given period of time and to select the handover destination cell selected by the cell selection section if the cell information is inputted from the cell selection section earlier than the handover destination information is inputted from the receiving section in the given period of time.

3. A handover method comprising:
a step in which a communication terminal apparatus measures received quality on a per cell basis;
a step in which received quality information, comprising information about measured received quality, is reported to a network host that is a handover source of the communication terminal apparatus;
a step in which the communication terminal apparatus determines whether or not to initiate a handover driven by the communication terminal apparatus to a handover destination cell, the determination initiating the handover being driven by the communication terminal apparatus when the measured received quality is equal to or less than a threshold;
a step in which a cell selection section of the communication terminal apparatus selects a handover destination cell based on the measured received quality when the communication terminal apparatus determines to initiate the handover driven by the communication terminal apparatus;
a step in which the communication terminal apparatus receives handover destination information, comprising information about a handover destination cell selected by the network host, the handover destination cell being selected in the network host of the communication terminal apparatus based on the received quality in the reported received quality information; and
a step in which the communication terminal apparatus performs a handover to the handover destination cell selected by the cell selection section when the handover destination information is not inputted from the network host to the communication terminal apparatus in a predetermined period of time following the reporting of the received quality information to the network host.

## Patentansprüche

1. Kommunikationsendgerätvorrichtung, umfassend:
einen Messabschnitt (103) für empfangene Qualität, der dazu eingerichtet ist, die empfangene Qualität auf einer pro-Zellen-Basis zu messen;
einen Berichterstattungsabschnitt (104, 108) für empfangene Qualität, der dazu eingerichtet ist, Informationen über die empfangene Qualität, umfassend Informationen über eine gemessene empfangene Qualität einer potentiellen Übergabezelle an einen Netzwerk-Host zu melden, bei dem es sich um eine Übergabequelle der Kommunikationsendgerätvorrichtung handelt;
einen Auswahlbestimmungsabschnitt (105), der zum Bestimmen eingerichtet ist, ob eine von der Kommunikationsendgerätvorrichtung betriebene Übergabe an eine Übergabezielzelle initiiert werden soll oder nicht, wobei die Bestimmung die von der Kommunikationsendgerätvorrichtung betriebene Übergabe initiiert, wenn die gemessene empfangene Qualität gleich oder niedriger als ein Schwellenwert ist;
einen Zellenauswahlabschnitt (106), der dazu eingerichtet ist, die Übergabezielzelle basierend auf der empfangenen Qualität auszuwählen, die in dem Messabschnitt für empfangene Qualität gemessen wird, wenn der Auswahlbestimmungsabschnitt bestimmt, die von der Kommunikationsendgerätvorrichtung betriebene Übergabe zu initiieren;
einen Empfangsabschnitt (101), der dazu eingerichtet ist, Übergabezielinformationen zu empfangen, umfassend Informationen über eine Übergabezielzelle, die von dem Netzwerk-Host ausgewählt wird, wobei die Übergabezielzelle in dem Netzwerk-Host der Kommunikationsendgerätvorrichtung basierend auf der empfangenen Qualität in den gemeldeten Informationen über die empfangene Qualität ausgewählt wird; und
einen Übergabesteuerungsabschnitt (107), der dazu eingerichtet ist, eine Übergabe an die Übergabezielzelle durchzuführen, die von dem Zellenauswahlabschnitt ausgewählt wird, wenn die Übergabezielinformationen nicht von dem Empfangsabschnitt (101) in den Übergabesteuerungsabschnitt (107) innerhalb einer vorgegebenen Zeitspanne nach dem Melden der Informationen über die empfangene Qualität an den Netzwerk-Host eingegeben werden.

2. Kommunikationsendgerätvorrichtung nach Anspruch 1, wobei, wenn die Übergabezielinformationen von dem Empfangsabschnitt (101) in den Übergabesteuerungsabschnitt (107) innerhalb der vorgegebenen Zeitspanne nach dem Melden der Informationen über die empfangene Qualität an den Netzwerk-Host eingegeben werden, der Übergabesteuerungsabschnitt dazu eingerichtet ist, die von dem Netzwerk-Host ausgewählte Übergabezielzelle auszuwählen, wenn die Übergabezielinformationen von dem Empfangsabschnitt früher als die Zelleninformationen einschließlich der Auswahl des Zellenauswahlabschnitts von dem Zellenauswahlabschnitt in einer vorgegebenen Zeitspanne eingegeben werden, und die von dem Zellenauswahlabschnitt ausgewählte Übergabezielzelle auszuwählen, wenn die Zelleninformationen von dem Zellenauswahlabschnitt früher als die Übergabezielinformationen von dem Empfangsabschnitt in der vorgegebenen Zeitspanne eingegeben werden.

3. Übergabeverfahren, umfassend:
einen Schritt, in dem eine Kommunikationsendgerätvorrichtung die empfangene Qualität auf einer pro-Zellen-Basis misst;
einen Schritt, in dem Informationen über die empfangene Qualität, umfassend Informationen über die gemessene empfangene Qualität an einen Netzwerk-Host gemeldet werden, bei dem es sich um eine Übergabequelle der Kommunikationsendgerätvorrichtung handelt;
einen Schritt, in dem die Kommunikationsendgerätvorrichtung bestimmt, ob eine von der Kommunikationsendgerät betriebene Übergabe an eine Übergabezielzelle initiiert werden soll oder nicht,
wobei die Bestimmung die von der Kommunikationsendgerätvorrichtung betriebene Übergabe initiiert, wenn die gemessene empfangene Qualität gleich oder niedriger als ein Schwellenwert ist;
einen Schritt, in dem ein Zellenauswahlabschnitt der Kommunikationsendgerätvorrichtung eine Übergabezielzelle basierend auf der gemessenen empfangenen Qualität auswählt, wenn die Kommunikationsendgerätvorrichtung bestimmt, die von der Kommunikationsendgerätvorrichtung betriebene Übergabe zu initiieren;
einen Schritt, in dem die Kommunikationsendgerätvorrichtung Übergabezielinformationen empfängt, umfassend Informationen über eine Übergabezielzelle, die von dem Netzwerk-Host ausgewählt wird, wobei die Übergabezielzelle in dem Netzwerk-Host der Kommunikationsendgerätvorrichtung basierend auf der empfangenen Qualität in den gemeldeten Informationen über die empfangene Qualität ausgewählt wird; und
einen Schritt, in dem die Kommunikationsendgerätvorrichtung eine Übergabe an die Übergabezielzelle durchführt, die von dem Zellenauswahlabschnitt ausgewählt wird, wenn die Übergabezielinformationen nicht von dem Netzwerk-Host in die Kommunikationsendgerätvorrichtung innerhalb einer vorgegebenen Zeitspanne nach dem Melden der Informationen über die empfangene Qualität an den Netzwerk-Host eingegeben werden.

## Revendications

1. Appareil terminal de communication comprenant :
une section de mesure de la qualité reçue (103) qui est conçue pour mesurer la qualité reçue sur une base cellule par cellule,
une section de signalisation de qualité reçue (104, 108) qui est conçue pour rapporter des informations concernant la qualité reçue, comprenant des informations sur la qualité reçue mesurée d'une cellule candidate au transfert vers un ordinateur hôte de réseau qui représente une source de transfert de l'appareil terminal de communication,
une section de détermination de sélection (105) qui est conçue pour déterminer s'il faut ou non initier un transfert de communication piloté par l'appareil terminal de communication vers une cellule de destination de transfert, la détermination lançant le transfert étant pilotée par l'appareil terminal de communication lorsque la qualité reçue mesurée est inférieure ou égale à un seuil,
une section de sélection de cellule (106) qui est conçue pour sélectionner une cellule de destination de transfert sur la base de la qualité reçue mesurée dans la section de mesure de qualité reçue, lorsque la section de détermination de sélection détermine qu'il faut lancer le transfert piloté par l'appareil terminal de communication,
une section de réception (101) qui est conçue pour recevoir des informations de destination de transfert, comprenant des informations concernant une cellule de destination de transfert sélectionnée par l'ordinateur hôte de réseau, la cellule de destination de transfert étant sélectionnée dans l'ordinateur hôte de réseau de l'appareil terminal de communication sur la base de la qualité reçue dans les informations de qualité reçue signalées, et
une section de commande de transfert (107) qui est conçue pour effectuer un transfert de communication vers la cellule de destination de transfert sélectionnée par la section de sélection de cellule lorsque les informations de destination de transfert ne sont pas reçues en entrée sur la section de commande de transfert (107) en provenance de la section de réception (101) dans un intervalle de temps prédéterminé suivant la signalisation des informations de qualité reçue sur l'ordinateur hôte de réseau.

2. Appareil terminal de communication selon la revendication 1, dans lequel, lorsque les informations de destination de transfert sont reçues en entrée sur la section de commande de transfert (107) en provenance de la section de réception (101) dans l'intervalle de temps prédéterminé suivant la signalisation des informations de qualité reçue sur l'ordinateur hôte de réseau, la section de commande de transfert est conçue pour sélectionner la cellule de destination de transfert sélectionnée par l'ordinateur hôte de réseau si les informations de destination de transfert sont reçues en entrée en provenance de la section de réception avant que les informations de cellule, incluant la sélection de la section de sélection de cellule, soient reçues en entrée en provenance de la section de sélection de cellule dans un intervalle de temps donné ; et pour sélectionner la cellule de destination de transfert sélectionnée par la section de sélection de cellule si les informations de cellule sont reçues en entrée en provenance de la section de sélection avant que les informations de destination de transfert soient reçues en entrée en provenance de la section de réception dans l'intervalle de temps donné.

3. Procédé de transfert de communication comprenant :
une étape dans laquelle un appareil terminal de communication mesure la qualité reçue sur une base cellule par cellule,
une étape dans laquelle des informations concernant la qualité reçue, comprenant des informations sur la qualité reçue mesurée sont rapportées à un ordinateur hôte de réseau qui représente une source de transfert de l'appareil terminal de communication,
une étape dans laquelle l'appareil terminal de communication détermine s'il faut ou non initier un transfert de communication piloté par l'appareil terminal de communication vers une cellule de destination de transfert, la détermination lançant le transfert étant pilotée par l'appareil terminal de communication lorsque la qualité reçue mesurée est inférieure ou égale à un seuil,
une étape dans laquelle une section de sélection de cellule de l'appareil terminal de communication sélectionne une cellule de destination de transfert sur la base de la qualité reçue mesurée dans la section de mesure de qualité reçue, lorsque l'appareil terminal de communication détermine qu'il faut lancer le transfert piloté par l'appareil terminal de communication,
une étape dans laquelle l'appareil terminal de questions reçoit des informations de destination de transfert, comprenant des informations concernant une cellule de destination de transfert sélectionnée par l'ordinateur hôte de réseau, la cellule de destination de transfert étant sélectionnée dans l'ordinateur hôte de réseau de l'appareil terminal de communication sur la base de la qualité reçue dans les informations de qualité reçue signalées, et
une étape dans laquelle l'appareil terminal communication effectue un transfert de communication vers la cellule de destination de transfert sélectionnée par la section de sélection de cellule lorsque les informations de destination de transfert ne sont pas reçues en entrée sur l'appareil terminal de communication en provenance l'ordinateur hôte de réseau dans un intervalle de temps prédéterminé suivant la signalisation des informations de qualité reçue sur l'ordinateur hôte de réseau.
